# FASCICULE DE BREVET EUROPEEN

(11) **EP 2 948 593 B1**
(45) Date de publication et mention de la délivrance du brevet: **02.05.2018**
(21) Numéro de dépôt: 13867743.0
(22) Date de dépôt: 20.11.2013
(51) Int. Cl.: E02B 9/00, F03B 13/06

(54) **SYSTEMES HYDRAULIQUES D'ACCUMULATION/RESTITUTION D'ENERGIES RENOUVELABLES**
HYDRAULISCHE SYSTEME ZUR ANSAMMLUNG / FREISETZUNG VON ERNEUERBARER ENERGIE
HYDRAULIC SYSTEMS FOR ACCUMULATING/RELEASING RENEWABLE ENERGY

(30) Priorité: 27.12.2012 DZ 120885
(43) Date de publication de la demande: 02.12.2015
(73) Titulaire: Chouaki, Boussad, 16050 Kouba (DZ)
(72) Inventeur: Chouaki, Boussad, 16050 Kouba (DZ)
(74) Mandataire: Roman, Alexis
(86) Numéro de dépôt international: PCT/DZ2013/000007
(87) Numéro de publication internationale: WO 2014/101922

(56) Documents cités:
- WO-A1-2007/009192
- WO-A2-2010/060504
- US-A- 4 282 444
- US-A1- 2008 253 837
- TETSUO FUJIHARA ET AL: "Development of Pump Turbine for Seawater Pumped-Storage Power Plant", HITACHI REVIEW, HITACHI LTD. TOKYO, JP, vol. 47, no. 5, 1 janvier 1998 (1998-01-01), pages 199-202, XP002617341, ISSN: 0018-277X

## Description

### Domaine technique auquel se rapporte l'invention

Le présent mémoire concernant cette invention, porte sur un système de stockage d'une partie de l'énergie produite par d'autres systèmes d'énergies renouvelables. Les sources de ces derniers systèmes étant par nature, en état d'activité non permanente, une partie de leur production en phase d'activité, devrait être stockée en vue d'une utilisation ultérieure en période d'inactivité. De tels systèmes à sources de productions non permanentes sont nombreux, à l'exemple de l'énergie solaire en l'absence ou insuffisance d'ensoleillement, de l'énergie éolienne en l'absence de vent, des énergies marines en période de calme météorologique, pour ne citer que les trois les plus répandus sur la planète.

### Etat de la technique antérieure

Les dits systèmes s'inspirent d'un système relativement ancien - datant d'une soixantaine d'années -, qui sera pris comme modèle de référence. Toutefois, comme on le verra dans la suite, la réflexion sur l'application de ce système à ceux potentiellement utilisables dans les conditions environnementales, économiques et technologiques particulières actuelles d'un pays tel que l'Algérie, nous ont donné l'occasion de découvrir certains concepts véritablement innovants en matière de développements hydrologique, économique et technologique. Nous avons pu ainsi nous rendre compte de ce que nous tenions-là probablement, des applications à intérêt fortement prometteur.

Quelques cas typiques de telles innovations font l'objet d'une description dans le corps de ce mémoire.

### Un vieil exemple de stockage d'énergie hydraulique. Le système-prototype français de Pragnères.

Comme cela a été signalé ci-dessus, ces systèmes s'inspirent dans leur principe, d'un système déjà relativement ancien car datant du début des années '50, le système dit de turbinage-pompage. Ce système qui nous servira donc de modèle était localisé, à son apparition, au lieu-dit "Pragnères" (Pyrénées françaises), où se trouvait un grand aménagement hydroélectrique dit de "haute chute" car situé à haute altitude, et présentant une grande dénivelée entre les altitudes respectives du barrage et de l'usine.

L'aménagement de "Pragnères" est localisé dans la Haute Vallée du Gave de Pau à une altitude de plus de 2000 m. Il comporte outre le barrage d'altitude de Pragnères qui lui a donné son nom, d'autres barrages au nombre de 2 à 3, situés à des altitudes moins élevées. Ce système d'aménagement hydroélectrique, fonctionne ainsi selon le système que l'on a coutume de désigner sous le vocable de « turbinage/pompage ».

Cela signifie qu'en heures creuses de consommation, quand l'électricité est relativement moins chère, l'eau est pompée sur plusieurs centaines de mètres d'élévation, depuis les barrages des basses vallées, vers le Haut Barrage de Pragnères, en vue d'y être stockée; et en heures de pointe de consommation, quand l'énergie est relativement plus chère, les eaux ainsi accumulées au Barrage de Pragnères sont à leur tour "turbinées" par la centrale hydroélectrique du même nom, située à plus de 1100 mètres de dénivelée, dans la basse vallée du Gave de Pau. Après turbinage, ces eaux sont en général recueillies et accumulées dans les barrages des basses vallées, avant un nouveau prochain pompage, selon un cycle régulier. WO 2010/060504 divulgue un système de turbinage/pompage utilisant de l'eau marine.

### But de l'invention

### Bilan d'énergie de systèmes de turbinage/pompage

Un tel système fonctionne donc partiellement en circuit fermé, de l'eau étant pompée à haute altitude avant d'être turbinée. Puis pompée à nouveau vers le barrage d'altitude, avant un prochain turbinage, et ainsi de suite.

Le bilan d'énergie du système, dans lequel on comparerait les kWh turbinés produits aux kWh dépensés en pompage, s'en trouverait sûrement négatif. Mais, et c'est ce qui importe, le bilan d'énergie traduit en termes financiers, sera quant à lui sensiblement positif, en considération du différentiel de coût de l'énergie d'heures pleines (dont celle de pointe) et de l'énergie d'heures creuses.

Cette différence était d'autant plus utile et appréciable, que déjà à cette époque du début des années '50, l'interconnexion des réseaux électriques d'Europe commençait à se développer, Car cette interconnexion impliquait entre autres avantages, un développement des échanges d'énergie d'heures creuses et d'énergie d'heures pleines. Qui plus est, de tels échanges énergétiques étaient rendus possibles par les décalages horaires naturels entre les pays, qui induisaient donc de semblables décalages dans les activités humaines des pays respectifs.

Un tel système est bien connu du monde de l'Energie en France, et dans le Monde. Il a même été appliqué un certain temps dans l'Interconnexion de certains Réseaux Electriques Nord-Africains (Tunisie, Algérie, Maroc). D'autres systèmes semblables ont existé à cette époque en Europe (dans l'ex-RFA essentiellement), et aux USA, un peu plus tard.

### Présentation de l'essence de l'invention

### Tendances mondiales actuelles dans le domaine de l'Energie. Voie "royale" algérienne

Les effets du Changement Climatique associés aux Risques de l'Energie électronucléaire mis en 2011 en évidence à Fukushima (Japon), remettent à l'ordre du jour la nécessité du développement des énergies renouvelables, principalement celles des types, solaire, éolienne, marine, géothermique, et de biomasse. Parmi ces énergies, les plus avancées en utilisation pour le moment dans le Monde, sont celles des types éolienne et solaire (autrement dite hélio-centrale).

A notre connaissance, à l'exception de certains capteurs solaires dont en particulier ceux à cylindres paraboliques - cylindres paraboliques simples ou cylindres à segments de miroirs de Fresnel plans ou paraboliques - qui peuvent exploiter un système autonome d'accumulation d'énergie pour la nuit, tous les autres capteurs solaires en particulier les panneaux photovoltaïques n'ont possèdent pas en propre. En effet dans les capteurs à cylindres paraboliques des hélio-centrales de ce type, cet agent d'accumulation se trouve être un fluide qui circule dans l'axe focal des miroirs de captage. C'est précisément ce fluide qui transmet et échange de la chaleur avec la vapeur d'eau surchauffée des turbines des groupes turboalternateurs de l'hélio-centrale. Quant aux capteurs photovoltaïques qui se trouvent être les plus répandus à diverses latitudes, ils sont encore demandeurs d'autres systèmes externes puissants, pour leur assurer la fonction d'accumulation d'énergie pour la nuit. Or si pour cela, il existe certes bien le système d'accumulation par batteries chimiques, ce dernier est toutefois loin d'être d'un rendement industriel satisfaisant.

### Proposition de Réorientation et de Diversification de l'Utilisation de l'Eau dans les Barrages et Systèmes-annexes de Transferts Hydrauliques

### Généralités

Même si notre sous-titre ne l'exprime probablement pas bien, il s'agit ici de revoir complètement le schéma de clivage précédent comportant d'un côté, l'utilisation totale de l'eau pour des besoins de "consommation" directe, et de l'autre côté la production d'électricité uniquement au moyen d'hydrocarbures fossiles générateurs potentiels de GES (Gaz à Effet de Serre). Il est donc temps de revenir à un schéma intégré dans le domaine de l'Energie, l'Eau devant être considérée comme un agent et non des moindres, des diverses formes et modes de génération potentielle de l'énergie.

Ceci est d'autant plus vrai, maintenant que l'on connaît le verdict de spécialistes qui prévoient une fin relativement proche, à nos réserves en hydrocarbures (pétrole et gaz conventionnels). Il se trouve aussi, qu'en l'état actuel de la connaissance des gaz de schistes, leurs techniques connues d'exploitation seraient des plus hasardeuses sur l'environnement.

Or question énergie solaire, notre pays se trouve faire partie de ceux de la ceinture chaude du Globe, que la Nature a si généreusement comblés. L'Energie solaire devrait donc constituer la base principale de notre développement. Car en plus de permettre le développement général du pays, elle suppléerait les hydrocarbures, dans leur exportation. Les hydrocarbures locaux seraient réservés aux Industries et Consommations locales. En cas de besoin, elle donnerait plus tard à l'Algérie les moyens financiers d'importation de ces produits, par exemple du Moyen-Orient. On aurait donc beaucoup à gagner en la réorientation rapide vers la primauté du "Solaire".

Dans le cadre d'une telle rapide réorientation souhaitée vers le tout "Solaire" des investissements énergétiques algériens, viendrait alors fatalement à se poser la question de la nécessité de l'accumulation de l'énergie le jour, en vue de son utilisation la nuit en absence de soleil. C'est précisément dans cet objectif que se situe la présente contribution d'idées, en vue de l'intégration du système turbinage/pompage dans le programme énergétique général algérien. Dans cette optique, et dans le cadre d'échanges mondialisés de l'énergie, de l'énergie hydroélectrique de pompage, soit locale soit importée servira de moyen d'accumulation, de production, de distribution locale et d'exportation d'énergie, en périodes de non-production normale des systèmes producteurs d'énergies non permanentes.

Ces systèmes d'accumulation/restitution d'énergies ont été conçus de manière à concerner aussi bien les investissements en projet, que ceux dont les projets sont en cours de réalisation. Ils pourraient aussi s'appliquer à des projets déjà concrétisés ou dont la concrétisation est tout près de l'être.

Dans un tel schéma, il serait souhaitable de poursuivre et de développer aussi bien les systèmes d'accumulation de l'eau dans la bande côtière humide dite "basse", que les systèmes d'accumulation complémentaire et de mise en charge prévus pour les besoins de consommation directe (irrigation, alimentation industrielle et humaine) dans la bande dite "haute" des Hautes Plaines et Hauts Plateaux.

De plus il conviendrait de tendre à généraliser le schéma dans lequel tous les pompages de la bande basse vers la bande haute, seraient réalisés en heures creuses. A titre de compensation, dans l'autre sens, un système de turbinage en heures pleines devra partager avec le système de pompage le maximum d'équipements possibles (conduites, bassins d'accumulation et de mise en charge, systèmes anti-bélier et cheminées d'équilibre, etc..).

Car et c'est un peu ce qui fait l'une des singularités de notre proposition, tous les pompages devraient se faire en heures creuses, au moyen d'une énergie provenant du solaire mais aussi et de moins en moins d'autres sources locales - telles que les Centrales solaires et de moins en moins les Centrales Thermiques à Hydrocarbures -, et/ou de Centrales à l'étranger dans le cadre des échanges internationaux d'énergie.

### Schéma de fonctionnement du système

De la quantité d'eau à relever des barrages de la bande basse vers ceux de la bande haute il y aurait aussi bien la quantité V_{PCI} à utiliser le lendemain pour la consommation directe (ex. irrigation), que le reliquat V_{TEN} à turbiner en heures pleines la nuit suivante. Donc mises à part les énergies renouvelables produites localement ou importées, dont la consommation ne serait pas différée, nous devrions être en mesure de stocker le maximum possible de supplément d'énergie par pompage de relèvement, pour pouvoir être en mesure de le restituer plus tard par turbinage sous la forme d'une énergie de valeur financière supérieure. Cette production sera acheminée par divers réseaux électriques, soit national pour les besoins de la consommation local soit international (feeders terrestres et/ou maritimes) pour les besoins à l'exportation.

On se rend ainsi compte que l'exploitation de nos systèmes de pompage-turbinage ne sera plus réalisée conjoncturellement, mais pourra l'être au contraire dans un cadre permanent et organisé. On peut donc dire que si la quantité annuelle d'eau à relever pour une consommation directe pourrait être strictement limitée aux besoins de consommation de l'Agriculture Alimentation Humaine et de l'Industrie, il n'en serait plus de même pour la quantité globale à pomper en vue d'un turbinage supplémentaire ultérieur. Quant à elle, cette quantité ne serait limitée que par les capacités de pompage ainsi que par les volumes des stocks amont et aval d'eau nécessaires aux mouvements.

Par ailleurs, la recherche d'optimisation des quantités d'eau disponibles ainsi que les inconvénients de pertes supplémentaires par évaporation qui résulteraient de l'accroissement de l'ensemble des surfaces "au miroir" (à air libre) des retenues d'eau, feront que l'évaporation totale devrait sûrement être plus importante. Car il faut évidemment compter sur une perte supplémentaire en volume par évaporation, d'environ 1.5m3/m2 par an de surface au miroir globale des lacs de réservoirs. Or il se trouve que par chance, nous détenons là aussi des réponses satisfaisantes à ces préoccupations. Mais de telles considérations sortent du cadre de ce mémoire.

Ce serait également l'occasion d'essayer d'augmenter le rendement des systèmes, en cherchant à augmenter les capacités des réservoirs par éventuelle systématisation du dragage (ou dévasement) de ceux des réservoirs, qui s'avéreraient être sujets à une sédimentation préjudiciable. Dans ce domaine aussi des idées et des solutions viables existent, à la condition d'avoir la volonté et le courage de sortir des sentiers battus, sans grand succès jusqu'ici.

Par ailleurs on se rend compte du caractère de totale indépendance du présent système de stockage (restitution) d'énergie renouvelable des modes, systèmes et lieux de génération primaire de cette énergie, qu'elle soit d'origine solaire, éolienne, marine, etc..

A l'échelle de l'Algérie une telle réorientation générale serait une démarche à pari risqué. Or comme on pourra s'en rendre compte, elle n'est ou n'aura été complexe qu'en apparence, tout en étant des plus riches en promesses. Car il ne s'agit finalement rien moins que de la mise en évidence d'un système de développement, par effet d'engrenage, des ressources d'énergies renouvelables.

### Les échanges d'énergies, phares du développement économique interrégional

On espère se trouver bientôt en situation d'échanger à tout instant tout type d'énergie, car toutes deviendront stockables et libres aux échanges, du moment que toutes seraient rendues transformables en énergie électrique. En particulier, le fait de pouvoir transformer l'énergie solaire, en énergie potentielle hydroélectrique qui peut naviguer au-delà des frontières et des mers, dans de simples feeders ou câbles aériens, enterrés ou immergés, nous fera mieux apprécier la richesse de cette manne. C'est ce type d'échanges entre l'Afrique du Nord, le reste de l'Afrique, ainsi que les pays de la rive Nord de la Méditerranée et au-delà, qui contribuera à rendre plus évident le concept de coopération économique régionale et intercontinentale.

Plus ordinairement, de tels systèmes s'avéreront constituer à la fois de solides leviers de développement économique, et un vaste gisement d'emplois à riche éventail de qualifications. Gisement qui s'étendra sur l'ensemble des pays de la Région, sans distinction, au Nord et au Sud du Sahara, comme au Nord de la Méditerranée.

### Mode de réalisation de l'invention

### Systèmes-Types d'Aménagements de Turbinage-Pompage Algériens

### Elaboration des idées de base

Comme nous l'avons mis en évidence supra, la réflexion sur la mise en application de ce système aux conditions algériennes, nous mis sur la voie de concepts inédits, en matière de développements hydrologique, économique et technologique.

Ce qui nous aura mis sur cette voie n'aura été rien d'autre que l'analyse des conditions physiques d'environnement de l'Aménagement hydro-électrique d'Erraguène-Ziama. En effet nous rappelons que l'aménagement Erraguène-Ziama sur l'Oued DjenDjen, conçu et entamé de construction milieu des aimées '50, comprenait comme barrage principal de retenue le barrage d'Erraguène, et comme hydrocentrale de haute chute la centrale de Ziama (Ziama-Mansouria).

Le bassin versant de l'Oued Djen-Djen est presque parallèle au rivage maritime proche. Il est compris entre une chaîne côtière de montagnes plongeant directement en falaises au rivage maritime (Méditerranée), et un autre massif parallèle de montagnes immédiatement au Sud. La distance à vol d'oiseau entre le barrage d'Erraguène et la côte à Ziama est d'environ 14 Km. L'hydrocentrale de Ziama est ainsi construite en "cathédrale", au pied et sous une falaise de plus de 600 mètres d'altitude sur laquelle a été localisée et fixée la conduite forcée d'alimentation de la Centrale. La Centrale de Ziama, compterait probablement ainsi au nombre des rares au monde à disposer directement de la Mer comme canal de fuite, immédiatement à l'aval des groupes de turbines hydroélectriques de type "Pelton".

La Centrale de Ziama est arrêtée depuis longtemps (près de 30 ans), à la suite d'un accident d'origine géologique, qui a fait s'effondrer le plafond de la galerie d'amenée de l'usine, en une zone située quelque part entre la prise d'eau (au barrage), et la cheminée d'équilibre (près de Ziama).

C'est probablement ce dernier handicap qui a induit la modification du mode d'exploitation du Barrage d'Erraguène. En effet, à la suite de cet accident, le barrage d'Erraguène a été intégré dans un aménagement hydraulique plus large. Il s'agit de l'aménagement hydro-agricole d'irrigation des Hauts-Plateaux de Sétif au Sud. Tout le reste de l'Aménagement d'Erraguène-Ziama, originellement dédié à la production hydroélectrique de haute chute, comprenant la galerie de 14 km, la cheminée d'équilibre, la conduite forcée, et l'usine sous-terraine en pied de falaise, allait se voir ainsi voué à l'abandon. C'était peut-être le refus inconscient de cet "indigne" coup du sort, qui nous a fait penser à cette solution de turbinage-pompage à l'eau de mer !

Dans le nouvel aménagement dont fera dorénavant partie le barrage d'Erraguène, son eau douce sera déviée vers le Sud pour des besoins d'irrigation, et ce sera l'eau de mer qui fera fonctionner son système de turbinage pompage.

Mais qu'on se rassure, il n'y aura à aucun moment nulle part de contact entre les deux eaux. Car le refoulement de l'eau de mer vers le barrage d'Erraguène, se fera vers de gigantesques réservoirs (parallélépipèdes en géomembrane PEHD Polyéthylène à Haute Densité), ancrés et flottants, sur la retenue du barrage.

En plus donc de l'utilisation de tous types d'eaux - biologiquement saines s'entend - les systèmes de turbinage-pompage comme solutions d'accumulation/restitution d'énergies renouvelables, vont utiliser diverses techniques et des produits industriels parmi les plus récents, tels que matériaux de la Géosynthétique (géomembranes, géotextiles, tuyauteries plastiques tout diamètre, etc..), ainsi que des pompes et turbines d'à peine un (01), à maximum trois (03), types de modèles-standard.

Au plan de l'Hydrologie et de la technologie des transferts d'eaux entre barrages, nos systèmes vont aussi beaucoup contribuer au développement de ces sciences et techniques. Pour l'Hydrologie par exemple, il deviendrait dépassé de penser qu'il puisse encore n'être question que d'étudier les données physiques (moyennes annuelles, crues, étiages, débits régularisés, évaporation, débits solides, etc..) propres à un seul bassin versant. Il faudra maintenant travailler dans des modèles physiques dans lesquels à tout instant, tout bassin versant où qu'il se trouve géographiquement localisé, sera considéré comme interagissant sur tous les autres aux alentours, et réciproquement. De nouveaux concepts hydrologiques seront à introduire, pour tenir compte des échanges additionnels en débits de "ruissellement" et "d'évaporation".

Dans le domaine des transferts d'eaux entre barrages, la nécessité de standardiser les modèles et les types d'équipements, dans les pompes et les turbines, dans les conduites d'amenées (vers les turbines à l'aval) et de refoulement (vers l'amont), va contribuer à promouvoir un gisement d'études important. De manière similaire, vu la quantité de tels produits mécaniques à fabriquer, cela constituera un carnet de commandes conséquent et durable, pour l'industrie.

### Divers types de systèmes et de leurs composants

Ces systèmes sont de trois sortes : les systèmes à eau douce intégrés aux systèmes de transferts entre retenues, les systèmes hybrides (eau douce + autres eaux non potables salées ou saumâtres), les systèmes à eaux non potables (eau de mer ou eaux saumâtres). Rassurons tout de suite le lecteur, dans les systèmes hybrides ou à eaux non potables, toutes les précautions seront prises pour que toutes les eaux soient en permanence maintenues en état de salubrité parfaite, et pour qu'à tout instant et en toute circonstance, il ne puisse y avoir mélange ou simple contact entre les eaux "non potables" et l'eau douce.

Outre le principe d'utilisation de ces eaux à la fois pour l'activité humaine générale (hygiène et alimentation, agriculture, toutes industries), et pour l'activité industrielle particulière systématique de production d'électricité d'heures pleines (et de pointe), ces systèmes partagent en commun le souci de généralisation et de standardisation des techniques et équipements concourant aux fonctions de pompage et de turbinage. Ce dernier point, est mis en exergue et illustré, par l'entremise des éléments principaux d'équipement ci-après :
1. Les pompages seront effectués de manière uniforme, avec autant d'étages d'action que nécessaires. A titre indicatif la hauteur (en altitude) d'un étage de pompage sera uniformément prise égale à 100 mètres, et un débit de pompage de 2m^3/s. Ceci conduit à adopter un seul type de pompe unicellulaire. Ce qui réduit considérablement le coût des équipements. Evidemment, le pompage s'effectue essentiellement en heures creuses (de jour et de nuit), le débit de pompage incluant s'il y a lieu, les quantités d'eau à dériver vers l'amont pour un usage d'activité humaine générale autre que la production d'énergie. Les heures creuses de pompage seront définies comme complémentaires à 24 heures, des heures de pointe et heures pleines de turbinage. Comme explicité ci-dessous, elles sont prises égales à 7305 heures annuelles, ce qui donne une durée moyenne journalière de pompage de 20 heures.
2. Les turbinages seront effectués dans une durée évidemment moindre. A titre indicatif, en nous inspirant des données et conditions du "Tarif Vert A5 Base" de l'EDF (Electricité De France), on peut considérer les 309 heures de pointe (P) annuelles + 65% des Heures Pleines d'Hiver (HPH=1762 heures). Cela nous donne 1455heures, ou une moyenne de 4 heures par 24 heures, l'année moyenne comptant 8760 heures (365 jours et 52 dimanches). Le débit de base d'une ligne "théorique" de turbinage, est donc le 1/5^{ème} du débit pompé soit 0.4m^3/s. Ne serait-ce que pour des raisons d'uniformité et de contrôle, le turbinage sera lui-aussi effectué par étages de 100 mètres. Donc selon les débits et les possibilités de regrouper des lignes de turbinage, les turbines seront uniformément soit du type à Réaction (Turbines Francis), soit du type à Impulsion (Turbines Pelton).
3. Pour des raisons de coûts de revient, les conduites de refoulement seront du type en PEHD (Polyéthylène à haute densité). A titre indicatif pour un débit de base de 2m^3/s et une vitesse de 1.5m/s, le diamètre intérieur d'une telle conduite, serait de l'ordre de 1300 mm (ou 52 pouces). Dans ce domaine aussi il y a lieu d'uniformiser les types de conduites et les diamètres. Ce dont on peut se réjouir, c'est que dans les conduites en PEHD, nous détenons un excellent matériau, en légèreté, flexibilité, facilité de manutention. Il est également excellent dans des systèmes à programmes de fonctionnement rapidement variable, potentiellement générateurs de surtensions élevées (coups-de-bélier). Car contrairement à l'acier, le PEHD "encaisse" mieux ces surtensions rapides. Par contre dans les centrales hydroélectriques d'étages, il sera possible de relier par exemple 4 conduites en une relativement courte conduite forcée (par exemple en acier) de manière à avoir un débit et une vitesse compatible avec les caractéristiques de la turbine. En cas de coup-de-bélier, les chocs sont encaissés par les 4 conduites d'amont + les 4 réservoirs d'amont immédiat (situés à 100 m plus haut, en altitude).
4. Pour les réservoirs, nous ne considérons pour l'instant que les réservoirs intermédiaires. Nous excluons pour l'instant les réservoirs principaux d'aval extrême et les réservoirs principaux d'amont extrême. La raison de cette exclusion tient au fait que les réservoirs intermédiaires seront presque toujours des réservoirs parallélépipèdes artificiels en géomembranes de PEHD (de 3.5 à 4.5 mm d'épaisseur), alors que les réservoirs principaux d'aval et d'amont extrêmes seront généralement des retenues de barrages.

Dans certains cas de systèmes proches des côtes marines (Méditerranée), le réservoir d'aval-extrême sera tout simplement la mer. Cas semblable dans les systèmes dont le réservoir d'aval-extrême peut être un lac d'eau non potable (ex. lacs salés Chotts des Hauts-Plateaux Algériens), ou tout simplement un puissant aquifère d'eau non potable (eau saumâtre) dont la nappe aurait son toit à profondeur acceptable.

Remarquons que dans les systèmes hybrides ou à eau non potable, toute la chaine d'énergie électrique (réservoir d'aval premier, réservoirs intermédiaires, conduites, pompes, turbines) sera conçue pour l'eau non potable (eau de mer ou eaux saumâtres). Il devra en être de même pour le plus haut - en altitude - réservoir, qui serait aussi le réservoir d'amont extrême. Dans ce dernier cas, les parallélépipèdes-unités des réservoirs d'amont extrême seront également en feuilles de PEHD, conçus comme flottant sur le lac d'eau douce. Cas semblable pour un barrage d'eau douce d'aval-extrême - proche du littoral maritime-, qui pourrait servir d'assiette de flottaison aux premiers réservoirs d'aval d'eau de mer. Dans ce cas particulier, si un système de transfert d'eau douce entre ce barrage et des barrages plus en aval existe, il sera traité sur une ligne de turbinage/pompage complètement séparée des lignes à eau non potable.

## Revendications

1. Procédé pour annexer des systèmes hydroélectriques de turbinage/pompage à des barrages formant de grands aménagements hydrauliques d'accumulation et de transferts des eaux d'irrigation, ces systèmes fonctionnant de manière alternée, en heures pleines et de pointe en turbinage hydroélectrique, et en heures creuses en pompage de relèvement des eaux à turbiner à nouveau dans le prochain cycle, l'énergie de pompage moins chère provenant de l'excédent produit par les capteurs d'énergies renouvelables en période d'activité, tandis que l'énergie hydroélectrique plus chère, est produite en complément de l'énergie renouvelable disponible, l'ensemble de ces systèmes hydrauliques formant avec des centrales d'énergies renouvelables de vastes réseaux intégrés, l'eau douce du barrage étant utilisée pour des besoins d'irrigation,
**caractérisé par le fait que** :
• de l'eau de mer ou de l'eau saumâtre fait fonctionner le système de turbinage/pompage,
• l'eau de mer ou l'eau saumâtre est pompée depuis un réservoir aval, le refoulement de l'eau de mer ou de l'eau saumâtre vers le barrage se faisant vers des réservoirs amont qui sont ancrés et flottants sur la retenue du barrage, lesquels réservoirs amont servent de réserves d'eau pour le turbinage, lesdits réservoirs amont étant situés plus haut en altitude que ledit réservoir aval.

2. Procédé selon la revendication 1, **caractérisé par le fait que** les réservoirs amont sont des réservoirs artificiels de forme parallélépipédique et réalisés en géomembrane de polyéthylène haute densité (PEHD).

3. Procédé selon la revendication 1, **caractérisé par le fait que** le réservoir aval consiste en une mer, en un lac salé ou en un aquifère d'eau saumâtre.

4. Procédé selon la revendication 1, **caractérisé par le fait que** les heures creuses de pompage représentent en moyenne 20 heures par jour.

5. Procédé selon la revendication 1, **caractérisé par le fait que** les heures pleines de turbinage représentent en moyenne 4 heures par jour.

6. Procédé selon l'une des revendications précédentes, **caractérisé par le fait que** le pompage est effectué en plusieurs étages de pompage, la hauteur en altitude de chaque étage de pompage étant prise égale à 100 m.

7. Procédé selon l'une des revendications précédentes, **caractérisé par le fait que** le refoulement de l'eau de mer ou de l'eau saumâtre vers les réservoirs amont s'effectue au moyens de conduites réalisées en polyéthylène haute densité (PEHD) et dont le diamètre intérieur est de l'ordre de 1300 mm pour un débit de 2m³/s et une vitesse de 1,5 m/s.

8. Procédé selon l'une des revendications précédentes, **caractérisé par le fait que** le turbinage est effectué par étage de 100 m.

9. Procédé selon la revendication 8, **caractérisé par le fait que** le turbinage est effectué dans des centrales hydroélectriques d'étages, chacune desquelles est fournie en eau de turbinage par quatre réservoirs amont immédiats, au moyen d'une conduite forcée, en acier, est reliée auxdits quatre réservoirs amont immédiats par des conduites d'amenées respectives, lesdits réservoirs amont immédiats étant situés en hauteur relativement à la centrale hydroélectrique concernée.

10. Procédé selon l'une des revendications précédentes, **caractérisé par le fait que** l'on utilise le système hydroélectrique de turbinage-pompage comme moyen d'accumulation et de restitution d'énergies renouvelables.

11. Procédé selon la revendication 1 ou 10, **caractérisé par le fait que** les énergies renouvelables sont d'origine solaire ou éolienne ou marine.

## Patentansprüche

1. Verfahren zum Hinzufügen von hydroelektrischen Turbinen-/Pumpensystemen an Staudämme, die große wasserbauliche Anlagen für die Speicherung und Übertragung von Bewässerungswasser bilden, wobei diese Systeme abwechselnd in Haupt- und Spitzenzeiten im hydroelektrischen Turbinenbetrieb und in Nebenzeiten im Pumpbetrieb zum Hochpumpen des im nächsten Zyklus zu turbinierenden Wassers funktionieren, wobei die günstigere Pumpenergie aus dem Überschuss stammt, der in der Betriebsperiode durch die Kollektoren erneuerbarer Energien erzeugt wird, während die teurere Wasserkraft als Ergänzung der verfügbaren erneuerbaren Energie erzeugt wird, wobei die Gesamtheit dieser hydraulischen Systeme mit Kraftwerken für erneuerbare Energien große integrierte Netzwerke bilden, wobei das Süßwasser des Staudamms für den Bewässerungsbedarf verwendet wird,
**dadurch gekennzeichnet, dass**:
• Meer- oder Brackwasser das Turbinen-/Pumpensystem betreibt,
• Meer- oder Brackwasser aus einem stromabwärtigen Speicher gepumpt wird,
das Rückströmen des Meerwassers oder Brackwassers in Richtung des Staudamms zu stromaufwärtigen Speichern erfolgt, die auf dem Stausee des Staudamms verankert und schwimmend sind, wobei die stromaufwärtigen Speicher als Wasserspeicher für die Turbinierung dienen, wobei die stromaufwärtigen Speicher in höheren Höhenlagen als der stromabwärtige Speicher angeordnet sind.

2. Verfahren nach Anspruch 1, **dadurch gekennzeichnet, dass** die stromaufwärtigen Speicher künstliche Speicher von parallelepipedischer Form sind und aus Geomembran aus Polyethylen mit hoher Dichte (HDPE) hergestellt sind.

3. Verfahren nach Anspruch 1, **dadurch gekennzeichnet, dass** der stromabwärtige Speicher aus einem Meer, einem Salzsee oder einem Brackwasseraquifer besteht.

4. Verfahren nach Anspruch 1, **dadurch gekennzeichnet, dass** die Nebenzeiten des Pumpbetriebs durchschnittlich 20 Stunden pro Tag betragen.

5. Verfahren nach Anspruch 1, **dadurch gekennzeichnet, dass** die Hauptzeiten des Turbinenbetriebs durchschnittlich 4 Stunden pro Tag betragen.

6. Verfahren nach einem der vorhergehenden Ansprüche, **dadurch gekennzeichnet, dass** das Pumpen in mehreren Pumpstufen durchgeführt wird, wobei die Höhe in Höhenlage jeder Pumpstufe gleich 100 m beträgt.

7. Verfahren nach einem der vorhergehenden Ansprüche, **dadurch gekennzeichnet, dass** das Rückströmen des Meerwassers oder Brackwassers zu den stromaufwärtigen Speichern mit Hilfe von Leitungen erfolgt, die aus Polyethylen mit hoher Dichte (HDPE) hergestellt sind und deren Innendurchmesser in der Größenordnung von 1.300 mm für eine Durchflussmenge von 2 m³/s und eine Geschwindigkeit von 1,5 m/s liegt.

8. Verfahren nach einem der vorhergehenden Ansprüche, **dadurch gekennzeichnet, dass** die Turbinierung pro Stufe von 100 m durchgeführt wird.

9. Verfahren nach Anspruch 8, **dadurch gekennzeichnet, dass** die Turbinierung in Wasserkraftwerken von Stufen durchgeführt wird, von denen jede durch vier unmittelbar stromaufwärtige Speicher mittels einer Druckleitung aus Stahl mit Turbinierwasser versorgt wird, mit den vier unmittelbar stromaufwärtigen Speichern durch jeweilige Zuleitungen verbunden ist, wobei die unmittelbar stromaufwärtigen Speicher in Bezug auf die betreffende Wasserkraftanlage hoch gelegen angeordnet sind.

10. Verfahren nach einem der vorhergehenden Ansprüche, **dadurch gekennzeichnet, dass** das hydroelektrische Turbinen-Pumpensystem als Mittel zur Speicherung und Rückgabe erneuerbarer Energien verwendet wird.

11. Verfahren nach Anspruch 1 oder 10, **dadurch gekennzeichnet, dass** die erneuerbaren Energien aus Sonne, Wind oder Meer stammen.

## Claims

1. Method for appending hydroelectric pump/turbine systems to dams forming large hydraulic developments for accumulating and transferring irrigation water, these systems operating alternately as hydroelectric turbines at peak and high-demand times and, during off-peak periods, as pumps to raise the water to be once again used for the turbine during the next cycle, wherein the cheaper pumping power is obtained from the excess produced by the renewable energy generators during the active period, while the more expensive hydroelectric power is produced in addition to the available renewable energy; these hydraulic systems together form, with renewable energy generation plants, vast integrated networks, with the fresh water of the dam being used for irrigation needs, **characterized in that:**
• seawater or brackish water is used to operate the pump/turbine system,
• the seawater or the brackish water is pumped from a downstream reservoir, the pumping of the seawater or of the brackish water to the dam being done towards upstream reservoirs which are anchored and floating on the impoundment of the dam, which upstream reservoirs serve as water reserves for turbine operation, said upstream reservoirs being located higher up than said downstream reservoir.

2. Method according to Claim 1, **characterized in that** the upstream reservoirs are artificial reservoirs, parallelepipedal in shape and made of a high-density polyethylene (HDPE) geomembrane.

3. Method according to Claim 1, **characterized in that** the downstream reservoir is a sea, a saline lake or a brackish water aquifer.

4. Method according to Claim 1, **characterized in that** the off-peak periods for pumping represent on average 20 hours per day.

5. Method according to Claim 1, **characterized in that** the peak times for turbine operation represent on average 4 hours per day.

6. Method according to one of the preceding claims, **characterized in that** pumping is carried out in several pumping stages, the altitude height of each pumping stage being taken to be equal to 100 m.

7. Method according to one of the preceding claims, **characterized in that** the seawater or the brackish water is pumped towards the upstream reservoirs through high-density polyethylene (HDPE) pipes whose internal diameter is of the order of 1300 mm for a flow rate of 2 m³/s and a flow velocity of 1.5 m/s.

8. Method according to one of the preceding claims, **characterized in that** turbine operation is performed in stages of 100 m.

9. Method according to Claim 8, **characterized in that** turbine operation is performed in stage hydroelectric power plants, each of which is supplied with turbine water by four immediate upstream reservoirs via a steel penstock, is connected to said four immediate upstream reservoirs by respective inlet conduits, said immediate upstream reservoirs being located above the hydroelectric power plant in question.

10. Method according to one of the preceding claims, **characterized in that** the hydroelectric pump/turbine system is used as a means for accumulating and releasing renewable energy.

11. Method according to Claim 1 or 10, **characterized in that** the renewable energy is of solar, wind or marine origin.
